# EUROPEAN PATENT APPLICATION

(11) **EP 4 819 366 A2**
(43) Date of publication of application: **07.10.2026**
(21) Application number: 26170022.3
(22) Date of filing: 31.03.2026
(51) Int. Cl.: H01M 50/533, B23K 26/244, H01M 4/70, H01M 50/528, H01M 50/536, H01M 50/538, B23K 101/38

(54) **CURRENT COLLECTOR PLATE AND BATTERY CELL COMPRISING CURRENT COLLECTOR PLATE**

(30) Priority: 31.03.2025 CN 202520595343 U
(71) Applicant: Techtronic Cordless GP, Anderson, SC 29621 (US)
(72) Inventor: LI, Jin Wei, Dongguan City (CN); WU, Jia Qing, Dongguan City (CN); GENG, Dan, Dongguan City (CN)
(74) Representative: Parker, Andrew James

(57) **Abstract**

A current collector plate (42) for a battery cell (10), characterized in that: the current collector plate comprises: a first electrical connection portion (421), wherein the first electrical connection portion is capable of being electrically connected directly to an end portion of an electrode assembly of the battery cell, and wherein the end portion of the electrode assembly of the battery cell is located on a first side (42a) of the current collector plate; and a second electrical connection portion (422), wherein the second electrical connection portion (422) is located on a radially outer side of the first electrical connection portion and is substantially parallel to the first electrical connection portion, and the second electrical connection portion is capable of being electrically connected directly to a terminal of the battery cell, and wherein the terminal of the battery cell is located on a second side (42b) of the current collector plate opposite the first side (42a), wherein a through slot (4211) is formed in the first electrical connection portion (421), and wherein the second electrical connection portion (422) protrudes toward the second side (42b) of the current collector plate relative to the first electrical connection portion (421).

## Description

### Technical Field

The present utility model relates to the field of batteries, and in particular, to a current collector plate and a battery cell comprising the current collector plate.

### Background Art

With the development of society, batteries have continuously developed quickly in terms of energy ratio, service life, etc., new energy devices with batteries, especially secondary batteries, as the energy storage apparatus have gradually become popular with consumers, and various types of batteries have gradually been applied on a large scale to various types of electronic devices. A battery having a cell inside, as a representative of small-sized batteries, has the characteristics of a small volume and being rechargeable, is widely used in various types of consumer-grade and industrial-grade electronic devices, and is able to significantly improve the experience of using electronic devices.

Such secondary batteries can be classified by shape as a cylindrical, prismatic or pouch-shaped secondary batteries. The cylindrical secondary batteries have the advantages of high volume energy density, simple structure, easy assembly, convenient standardization, etc. With the development of technology, the cylindrical batteries have gradually become dominant in the market. A cylindrical secondary battery typically includes a cylindrical electrode assembly, a cylindrical housing (also referred to as a "cylindrical can") that hold an electrode assembly, an electrolyte that is injected into the can to enable ions to move, and a current collector plate (also referred to as a "current collecting sheet") that provides an electrical connection between the electrode assembly and a corresponding battery terminal to conduct current.

A current collector plate is typically electrically connected between a terminal of a battery cell (for example, a positive or negative terminal formed by or integrated into the housing of the battery cell) and an end portion (for example, a positive or negative end portion) of an electrode assembly in the housing of the battery cell by means of welding or the like. During a welding operation on the current collector plate in the prior art, heat generated by welding or other factors in the welding operation usually cause stress changes in the current collector plate, resulting in deformation of the current collector plate (in particular, larger deformation is prone to occur near the central region of the current collector plate). This undesired and uneven deformation may further cause poor attachment between the current collector plate and the electrode assembly, detachment at the welded joints, poor welding performance, and even poor contact.

In addition, in order to achieve the electrical connection between the terminal of the battery cell and the end portion of the electrode assembly, in the prior art, the current collector plate is typically welded directly to the end portion of the electrode assembly, and a separate connector is additionally provided to achieve the electrical connection between the current collector plate and the terminal of the battery cell and to support the current collector plate. However, this method results in an increase in the number of parts inside the battery cell with limited space, leading to a complex structure and making it prone to poor contact due to displacement of the parts.

Therefore, there is a need for an improved current collector plate and a battery cell including the current collector plate, so as to solve or at least mitigate the above problems and improve the welding performance, structural compactness, and reliability of the battery cell.

### Summary of the Utility Model

An objective of the present utility model is to provide a current collector plate and a cell including a current collector plate, so as to solve or at least mitigate the problems of deformation and therefore welding defects caused by the stress distribution during the welding process of the current collector plate in the prior art, while reducing the number of parts inside the battery cell, and to improve the welding performance, structural compactness, and reliability of the battery cell.

To achieve at least the above objective, according to one aspect of the present utility model, there is provided a current collector plate for a battery cell. The current collector plate comprises: a first electrical connection portion, wherein the first electrical connection portion is capable of being electrically connected directly to an end portion of an electrode assembly of the battery cell, and wherein the end portion of the electrode assembly of the battery cell is located on a first side of the current collector plate; and a second electrical connection portion, wherein the second electrical connection portion is located on a radially outer side of the first electrical connection portion and is substantially parallel to the first electrical connection portion, the second electrical connection portion is capable of being electrically connected directly to a terminal of the battery cell, and the terminal of the battery cell is located on a second side of the current collector plate opposite the first side; wherein a through slot is formed in the first electrical connection portion; and wherein the second electrical connection portion protrudes toward the second side of the current collector plate relative to the first electrical connection portion.

The current collector plate according to the present utility model is capable of respectively providing the electrical connections between the current collector plate and the end portion of the electrode assembly and the terminal of the battery cell through the first electrical connection portion and the second electrical connection portion thereof, without additionally adding other connection components. The electrical connection between the end portion of the electrode assembly and the terminal of the battery cell is achieved by relying solely on the current collector plate itself, thereby drawing out the current from the electrode assembly. In addition, during the welding process, different portions of the thin sheet-like current collector plate are prone to stress deformation in undesired ways and directions due to heat, resulting in poor contact. The current collector plate according to the present application effectively achieves stress relief by providing a through slot in the first electrical connection portion, preventing poor contact or disengagement caused by deformation of the current collector plate during or after welding. Thus, the current collector plate according to the present utility model is simple and compact, easy to assemble, and highly reliable, making them less susceptible to poor contact and so on.

In some preferred embodiments, at least two through slots are formed in the first electrical connection portion, with each through slot extending outward along a radial direction from a substantially central position of the current collector plate, wherein the at least two through slots are configured to be capable of dividing the first electrical connection portion into a plurality of sub-portions.

In some preferred embodiments, the current collector plate is a negative current collector plate, wherein the first electrical connection portion is capable of being welded to a negative end portion of the electrode assembly located on the first side of the negative current collector plate, so as to electrically connect the current collector plate to the negative end portion, and wherein the second electrical connection portion is capable of being welded to a negative terminal of the battery cell located on the second side of the negative current collector plate, so as to electrically connect the current collector plate to the negative terminal.

In some preferred embodiments, the current collector plate further comprises a central through hole located on a radially inner side of the first electrical connection portion, wherein each of the through slots extends outward along a radial direction from the central through hole.

According to these embodiments, the above central through hole and through slot are capable of allowing an electrolyte to pass therethrough to enter the electrode assembly (i.e., a battery jelly roll).

In some preferred embodiments, the at least two through slots are configured to distribute evenly along a circumferential direction of the current collector plate, so as to divide the first electrical connection portion evenly into a plurality of sub-portions.

In some preferred embodiments, each of the through slots is of an elongated shape and is configured to extend outward along a radial direction from the central through hole to a position close to a connection region between the first electrical connection portion and the second electrical connection portion.

According to these embodiments, it can not only increase the area through which the electrolyte can pass, facilitating the electrolyte to pass through, but also help relieve thermal stress in the first electrical connection portion, thereby increasing the elasticity of the first electrical connection portion.

In some preferred embodiments, the current collector plate further comprises: an annular circumferential edge portion extending outward along a radial direction from the second electrical connection portion, the circumferential edge portion extending in the same plane as the first electrical connection portion.

According to these embodiments, the second electrical connection portion is provided to be closer to the negative terminal located on the second side of the current collector plate than the extension plane of the circumferential edge portion and the first electrical connection portion, enabling the second electrical connection portion to fit more closely to the negative terminal during assembly and welding, thereby resulting in higher welding reliability.

In some preferred embodiments, each sub-portion of the first electrical connection portion is capable of being welded to an end portion of the electrode assembly via a welding path, the welding path being a continuous bent extension line, a dotted line, or a discontinuous line; and the second electrical connection portion is capable of being welded to a terminal of the battery cell via a welding path, the welding path being a continuous extension line, a dotted line, or a discontinuous line.

According to these embodiments, compared with the case where the material of nickel metal is used throughout, the use of copper material throughout enables the negative current collector plate to have lower internal resistance and better electrical conductivity as a whole, and the copper surface of the first electrical connection portion can be better welded to the flattened portion of the negative end portion which is usually formed by copper material. Moreover, nickel plating at the weld site allows it to be better welded with the housing, avoiding the problem that the pure copper material is typically difficult to weld with other materials.

In some preferred embodiments, the current collector plate is an integral member obtained by stamping a metal plate and performing material removal.

In some preferred embodiments, each portion of the current collector plate has a same thickness.

In some preferred embodiments, the ratio of the height of the second electrical connection portion protruding from an extension plane of the first electrical connection portion toward the second side of the current collector plate to the thickness of the current collector plate is about 1: 15 to about 1: 1.

In some preferred embodiments, the ratio of the width of the second electrical connection portion in the radial direction to the width of the first electrical connection portion in the radial direction is about 0.15 to about 0.35; and/or the ratio of the width of the circumferential edge portion in the radial direction to the width of the second electrical connection portion in the radial direction is about 0.1 to about 0.2.

In some preferred embodiments, the ratio of the diameter of the through slot to the width of the first electrical connection portion in a radial direction is about 0.1 to about 1.0.

In some preferred embodiments, the ratio of the diameter of the central through hole to the width of the first electrical connection in a radial direction is about 0.1 to about 1.0.

In some preferred embodiments, the second electrical connection portion is connected to the first electrical connection portion and/or the circumferential edge portion through an inclined transition portion, wherein the transition portion extends obliquely toward the second electrical connection portion on the second side.

In some preferred embodiments, an angle formed between the transition portion to a plane where the first electrical connection portion is located is about 10° to about 90°.

In some preferred embodiments, the angle formed between the transition portion 424 to the plane where the first electrical connection portion is located is about 30° to about 60°.

According to another aspect of the present utility model, there is provided a battery cell, comprising: a housing, the housing including a closed end portion and an open end portion opposite the closed end portion; and an electrode assembly, wherein the electrode assembly is located within the housing and between the closed end portion and the open end portion, and the electrode assembly includes a negative end portion close to the closed end portion and a positive end portion close to the open end portion. The battery cell further comprises the current collector plate according to any one of the above solutions.

In some preferred embodiments, a negative terminal is integrated in the closed end portion of the housing, or the closed end portion forms the negative terminal, wherein the current collector plate is a negative current collector plate, and the first electrical connection portion is capable of being welded to the negative end portion of the electrode assembly located on the first side of the negative current collector plate, so as to electrically connect the current collector plate to the negative end portion, and wherein the second electrical connection portion is capable of being welded to the closed end portion of the housing located on the second side of the negative current collector plate, so as to electrically connect the negative current collector plate to the negative terminal.

In some preferred embodiments, the second electrical connection portion is capable of being welded to the closed end portion of the housing via a welding path, and a surface of the closed end portion of the housing facing an external space is coated with a coating that covers the welding path.

According to these embodiments, the coating is provided so that the welding line region between the second electrical connection portion and the closed end portion of the housing can be protected, making it less susceptible to rust and corrosion.

### Brief Description of the Drawings

To better understand the above and other objectives, features, advantages and functions of the present utility model, the preferred embodiments shown in the drawings may be referred to. In the drawings, identical reference signs denote identical components. Those skilled in the art should understand that the drawings are intended to clarify schematically preferred embodiments of the present utility model, without limiting the scope of the present utility model in any way, and the various components in the drawings are not drawn to scale.
Fig. 1 is an exploded perspective view of a battery cell according to an embodiment of the present utility model.
Fig. 2 is a planar view of a positive electrode, a negative electrode and a separator of a battery assembly in the battery cell shown in Fig. 1, according to an embodiment of the present utility model.
Fig. 3 is a schematic cross-sectional view of a portion of the battery cell shown in Fig. 1.
Fig. 4 is a perspective view of a negative current collector plate according to an embodiment of the present utility model.
Fig. 5 is a perspective view of the negative current collector plate shown in Fig. 4 when viewed from another angle.
Fig. 6 is a front view of the negative current collector plate shown in Fig. 4 when viewed from a first side.
Fig. 7 is a front view of the negative current collector plate shown in Fig. 4 when viewed from a second side opposite the first side.
Fig. 8 is a cross-sectional view of the negative current collector plate shown in Fig. 4 along a thickness direction.

### Key to reference signs:

10 battery cell; 14 housing; 14a open end portion of housing; 14b closed end portion of housing; 18 battery assembly; 18a positive end portion of electrode assembly; 18b negative end portion of electrode assembly; 62 first flattened portion; 66 second flattened portion; 38 positive current collector plate; 42 negative current collector plate; 22 first insulating member; 26 second insulating member; 70 through hole; 30 positive terminal; 34 negative terminal; 46 positive electrode sheet; 50 negative electrode sheet; 54 separator; 58 central hole; 42a first side of negative current collector plate; 42b second side of negative current collector plate; 421 first electrical connection portion of negative current collector plate; 4211 through slot of first electrical connection portion; 4212 central through hole of first electrical connection portion; 4213 first welding line; 422 second electrical connection portion of negative current collector plate; 4221 joining surface of second electrical connection portion; 4223 second welding line; 423 circumferential edge portion of negative current collector plate; 424 transition portion.

### Detailed Description of Embodiments

Specific embodiments of the present utility model are now described in detail with reference to the drawings. Described here are merely preferred embodiments according to the present utility model. Based on these preferred embodiments, those skilled in the art could conceive of other manners in which the present utility model can be implemented, and such other manners likewise fall within the scope of the present utility model.

First of all, it should be noted that, hereinafter, the relative positional relationships between components in a battery cell are all described in a state where the components are correctly assembled.

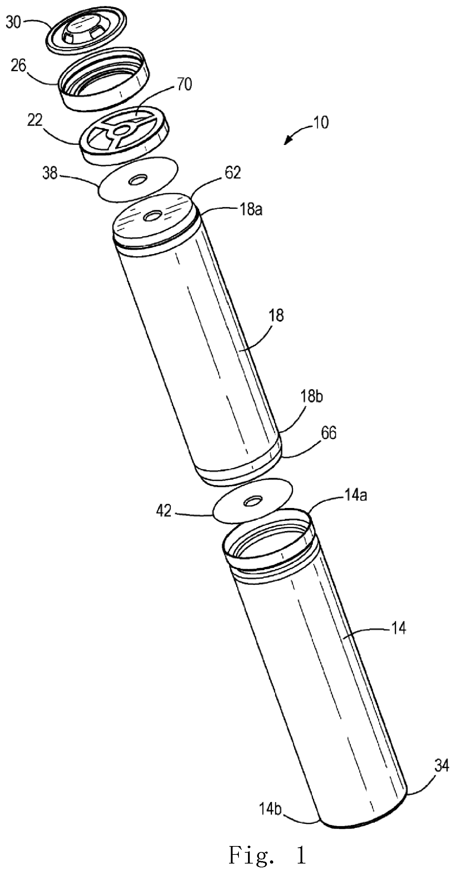

The present utility model discloses a current collector plate for a battery cell, and a battery cell including the current collector plate. Next, a battery cell according to an embodiment of the present utility model will be first described with reference to Fig. 1. The battery cell 10 includes a substantially cylindrical housing 14, and the housing is configured as a cylindrical can with an open end, including an open end portion 14a and a closed end portion 14b opposite the open end portion. The battery cell 10 further includes: a lid portion capable of engaging with the open end portion 14a of the housing 14 to close the inside of the housing; and an electrode assembly 18, a first insulating member 22 and a second insulating member 26 that are located inside the housing.

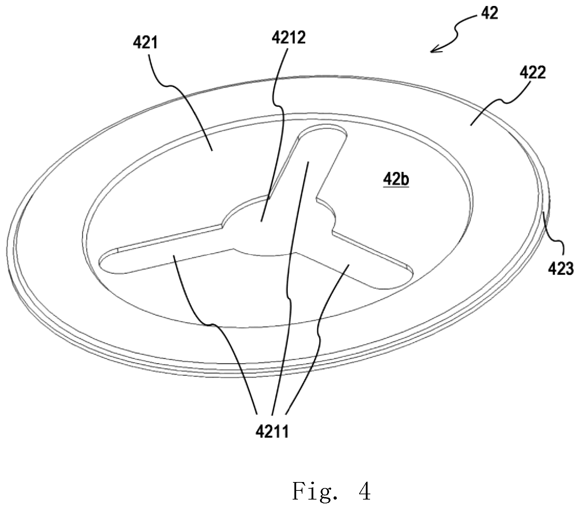

The battery cell 10 further includes a positive terminal 30 located at the open end portion 14a of the housing 14, a negative terminal 34 located at the closed end portion 14b of the housing 14, a first conductor (a positive current collector plate 38 in this embodiment, wherein the positive current collector plate is only schematically illustrated by a substantially circular sheet-like component in Fig. 1, which does not represent its specific shape) located between the electrode assembly 18 and the positive terminal 30 in the housing 14, and a second conductor (a negative current collector plate 42 in this embodiment, wherein the negative current collector plate is only schematically illustrated by a substantially circular sheet-like component in Fig. 1, which does not represent its specific shape, The specific shape and structure are exemplarily illustrated in Fig. 4-7 and will be described in detail below) located between the electrode assembly 18 and the negative terminal 34 in the housing 14. The positive terminal 30 and the negative terminal 34 of the battery cell are used to draw out the current inside the battery cell, thereby providing electrical contact with an external apparatus, such as electrically connecting to a charging device or an electrical device, or enabling electrical connection between different battery cells.

The positive terminal 30 can be integrated into the lid portion. In this case, the lid portion may, for example, be made of a non-conductive material such as plastic, and an electronic component used as the positive terminal 30 may be integrated into the lid portion. Alternatively, the positive terminal 30 may be formed directly by the lid portion. In this case, the lid portion may, for example, be made of steel, aluminum or other conductive metal materials, so that the lid portion itself serves directly as the positive terminal. Similarly, the negative terminal 34 may be integrated into the closed end portion 14b of the housing 14. In this case, the housing may, for example, be made of non-conductive material such as plastic, and an electronic component used as the negative terminal 34 may be integrated into the closed end portion 14b of the housing 14. Alternatively, the negative terminal 34 may be formed directly by the housing 14. In this case, the housing may, for example, be made of steel, aluminum or other conductive metal materials, so that the closed end portion of the housing itself serves directly as the negative terminal.

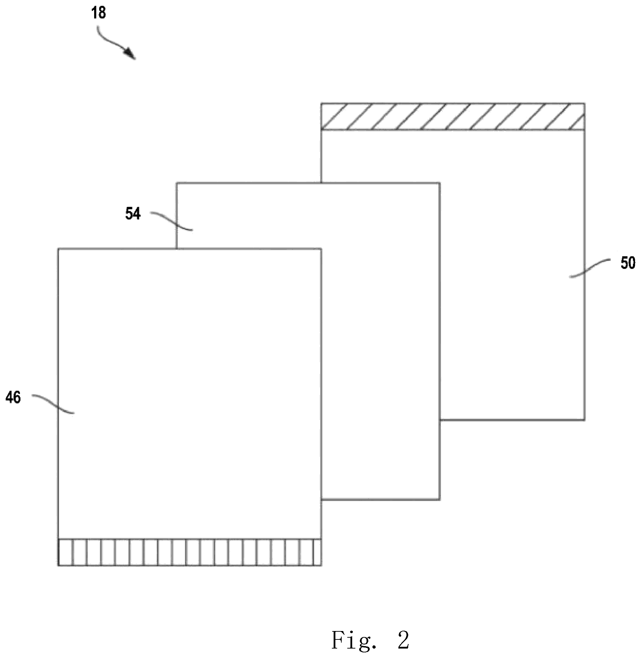

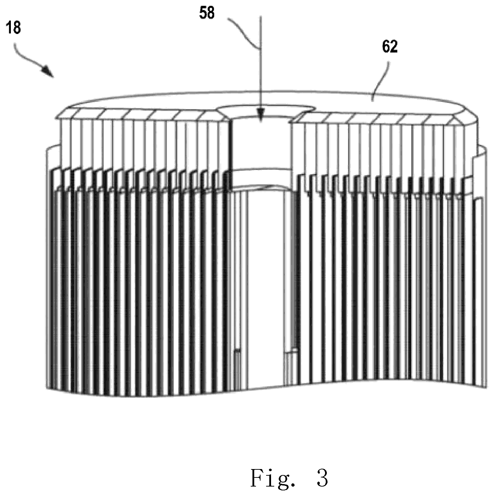

Referring to Fig. 2, the electrode assembly 18 includes a positive electrode sheet 46, a negative electrode sheet 50, and one or more separators 54 (i.e., insulating sheets 54) located between the positive electrode sheet 46 and the negative electrode sheet 50. As shown in Fig. 3, the multiple sheets described above may be wound around a center hole 58 of the electrode assembly 18 to form a concentric layer, so as to form a jelly roll. In some embodiments, the electrode assembly 18 is wound around a central pin, which may be removed after the winding operation is completed. After winding, the exposed or uncoated electrode material portion of the positive electrode sheet 46 forms a positive end portion 18a of the electrode assembly 18, and the exposed or uncoated electrode material portion of the negative electrode sheet 50 forms a negative end portion 18b of the electrode assembly 18. The exposed portion at the positive end portion 18a may be flattened into a flat, roughened surface to form a first flattened portion 62, and the exposed portion at the negative end portion 18b may be flattened into a flat, roughened surface to form a second flattened portion 66. The first flattened portion 62 provides a coupling surface for the first conductor, so that the first conductor may be coupled (for example, welded, fixed, adhered, fastened, etc.) to the electrode assembly 18. Similarly, the second flattened portion 66 provides a coupling surface for the second conductor.

The first insulating member 22 described above is made of plastic and/or rubber. The first insulating member 22 may be provided with a through hole 70, and the through hole allows the first conductor to extend through the first insulating member 22 and come into contact with a first terminal 30. The first flattened portion 62 may be arranged or placed in the first insulating member 22 to prevent contact between the first flattened portion 62 and the housing 14. The first terminal 30 may be arranged in the second insulating member 26 which is supported on the first insulating member 22. Once the electrode assembly 18 and other electrical elements are arranged in the housing 14, the first insulating member 22 and the second insulating member 26 are crimped on the first terminal 30.

In this embodiment, the first conductor and the second conductor described above are formable (e.g., bendable, compliant, manipulable, etc.) current collector plates, current collectors, current collecting sheets or other components that can electrically connect the positive end portion 18a and the negative end portion 18b of the electrode assembly to the positive terminal 30 and the negative terminal 34 of the electrode assembly, respectively.

To solve the problem that the current collector plate in the prior art is prone to deformation during welding, resulting in poor welding and low reliability, and to also solve the problem that the current collector plate in the prior art has a large number of related parts, a complex structure, and a layout that is not sufficiently compact, the present utility model provides a current collector plate for a battery cell. The current collector plate includes: a first electrical connection portion, wherein the first electrical connection portion is capable of being electrically connected to an end portion of an electrode assembly of the battery cell, and wherein the end portion of the electrode assembly of the battery cell is located on a first side of the current collector plate; and a second electrical connection portion that is located on a radially outer side of the first electrical connection portion and is substantially parallel to the first electrical connection portion, wherein the second electrical connection portion is capable of being electrically connected directly to a terminal of the battery cell, and the terminal of the battery cell is located on a second side of the current collector plate opposite the first side; wherein a through slot is formed in the first electrical connection portion; and wherein the second electrical connection portion protrudes toward the second side of the current collector plate relative to the first electrical connection portion.

The current collector plate according to the present utility model is capable of respectively providing the electrical connections between the current collector plate and the end portion of the electrode assembly and the terminal of the battery cell through the first electrical connection portion and the second electrical connection portion thereof, without additionally adding other connection components. The electrical connection between the end portion of the electrode assembly and the terminal of the battery cell is achieved by relying solely on the current collector plate itself, thereby drawing out the current from the electrode assembly. In addition, during the welding process, different portions of the thin sheet-like current collector plate are prone to stress deformation in undesired ways and directions due to heat, resulting in poor contact. The current collector plate according to the present application effectively achieves stress relief by providing a through slot in the first electrical connection portion, preventing poor contact or disengagement caused by deformation of the current collector plate during or after welding. Thus, the current collector plate according to the present utility model is simple and compact, easy to assemble, and highly reliable, making them less susceptible to poor contact and so on.

The current collector plate according to the present utility model may be either a positive current collector plate as the first conductor described above or a negative current collector plate as the second conductor described above. Next, with reference to the embodiments of Figs. 4 to 8, the current collector plate according to the present utility model will be exemplarily described by taking the negative current collector plate 42 as an example. All or part of the structure, technical features, connection relationships, etc. described are also applicable to the positive current collector plate. Those skilled in the art can, according to actual needs, choose to use the current collector plate of the present utility model for the positive or negative electrode of a battery cell.

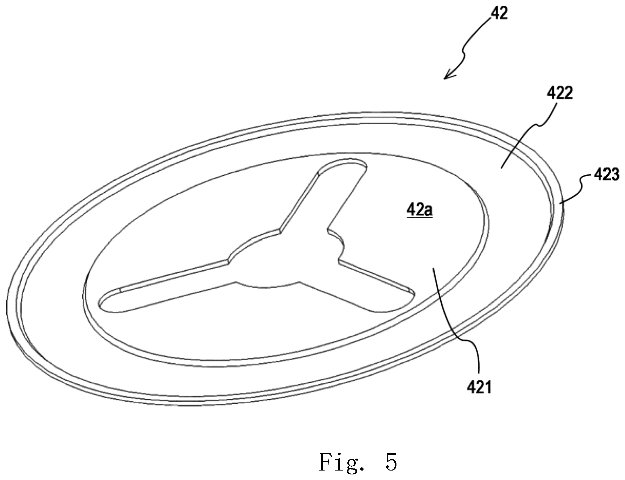

Figs. 4 and 5 show perspective views of the negative current collector plate according to the present utility model when viewed from a second side 42b and a first side 42a, respectively. An end portion (the negative end portion 18b in this embodiment) of the electrode assembly 18 of the battery cell 10 is located on the first side 42a of the negative current collector plate 42, and a terminal (the negative terminal 34 in this embodiment) of the battery cell 10 is located on the second side 42b of the negative current collector plate 42 opposite the first side 42a. It should be noted that the first side and the second side described above are both with respect to a state where the negative current collector plate is correctly assembled into the battery cell.

The negative current collector plate 42 includes a first electrical connection portion 421 that is capable of being electrically connected directly to the negative end portion 18b of the electrode assembly 18. That is, the first electrical connection portion 421 is in direct contact and electrically connected to the negative end portion 18b, and there are no other parts provided between the two for the electrical connection. For example, the first electrical connection portion 421 can be welded to the second flattened portion 66 of the negative end portion 18b described above to achieve the electrical connection between the current collector plate and the electrode assembly. The negative current collector plate 42 further includes a ring-shaped second electrical connection portion 422, which extends outward along a radial direction from the first electrical connection portion 421, and the second electrical connection portion 422 can be electrically connected to the negative terminal 34 of the battery cell 10. That is, the second electrical connection portion 422 is in direct contact and electrically connected to the negative terminal 34, and there are no other parts provided between the two for the electrical connection. For example, the second electrical connection portion 422 can be welded to the inner wall of the closed end portion 14b of the housing 14 of the battery cell 10, in which the negative terminal 34 is integrated or which forms the negative terminal 34 itself, to achieve the electrical connection between the current collector plate and the housing of the battery cell.

A through slot is formed in the first electrical connection portion 421 to relieve thermal stress, preventing the first electrical connection portion from deforming as a whole due to thermal stress during or after welding, and leading to poor contact. The provision of the through slot can also increase the overall elasticity of the current collector plate, so that during transport, use or other processes, even if the battery cell is dropped, collided or the like, the electrical connection function of the current collector plate can still be ensured to be good. In addition, the through slot extends through the thickness direction of the current collector plate, thereby allowing an electrolyte to pass therethrough.

Those skilled in the art can, as needed, choose the shape of the through slot, the position of the through slot on the first electrical connection portion, its extension direction, size and quantity, etc. For example, the through slot may extend continuously from the position of a circumferential edge of the first electrical connection portion to another circumferential edge of the first electrical connection portion, or may extend from the position of a circumferential edge of the first electrical connection portion to a position within the radial interior of the first electrical connection portion and stop there, or may extend only in the internal region of the first electrical connection portion, without extending to the position of the circumferential edge. The through slot may have a bent shape, an elongated shape extending in a substantially straight direction, a teardrop shape, a triangular shape, or the like. The number of through slots may be one or more. The present utility model is not intended to limit the position, orientation, number, shape, size, or other aspects of the through slot, as long as the through slot provided can achieve the purpose of relieving thermal stress during welding and increasing the overall elasticity of the current collector plate.

In a preferred embodiment, at least two through slots 4211 are formed in the first electrical connection portion 421, with each through slot extending outward along a radial direction from a substantially central position of the current collector plate, wherein the at least two through slots 4211 are configured to be capable of dividing the first electrical connection portion into a plurality of sub-portions. Preferably, the at least two through slots 4211 are configured to distribute evenly along a circumferential direction of the current collector plate, so as to divide the first electrical connection portion evenly into a plurality of sub-portions. As shown in Fig. 4, in this embodiment, three through slots are preferably provided along the circumferential direction of the current collector plate, with the same spacing angle between any two of the three through slots, i.e. 120 degrees. Thus, the first electrical connection portion in this embodiment is divided by the three through slots into three substantially sector-shaped sub-portions, each having a central angle of 120 degrees. Preferably, the ratio of the diameter of each through slot to the width of the first electrical connection portion in a radial direction is about 0.1 to 1.0.

Further, the second electrical connection portion 422 protrudes toward the second side 42b of the current collector plate relative to the first electrical connection portion 421. That is, the extension plane of the second electrical connection portion 422 is closer to the closed end portion 14b of the housing of the battery cell than the extension plane of the first electrical connection portion 421. The first electrical connection portion and the second electrical connection portion are provided on different planes in such a manner that the two electrical connection portions can both be closer to the respective components (the negative end portion 14b and the negative terminal 34) connected thereto, facilitating welding and assembly. Moreover, such a structure can also increase the current collector plate's tolerance to stress-induced deformation: since the first electrical connection portion and the second electrical connection portion respectively extend in different planes, a certain degree of stress-induced deformation occurring in one of them does not affect or only minimally affects the other, thereby avoiding poor contact or disengagement between the two portions and the respective components to be welded thereto, caused by mutual pulling therebetween.

The battery cell using the above current collector plate according to the present utility model has high reliability and good electrical connection characteristics. For example, multiple battery cells using the above current collector plate were subjected to a tumbling drop test in an uncharged state with a remaining capacity of 0%. After the test, the electrical connection features of the battery cells were not damaged, and 100% of the battery cells passed the test. This indicates high reliability of welding between the above current collector plate and the negative end portion of the battery assembly and the housing of the battery cell.

Further, the negative current collector plate further includes a central through hole 4212 located on a radially inner side of the first electrical connection portion 421, wherein each of the through slots 4211 extends outward along a radial direction from the central through hole 4212. The central through hole 4212 and the above through slots 4211 can all allow an electrolyte to pass therethrough to enter the electrode assembly (i.e., the battery jelly roll). Each of the through slots 4211 may be of an elongated shape (as shown in Fig. 4), or a variety of shapes such as a teardrop shape or a triangular shape, and may be configured to extend outward along a radial direction from the central through hole 4212 to a position close to the connection region between the first electrical connection portion 421 and the second electrical connection portion 422 (that is, the extension length of the through slot spans most of the radial dimension of the first electrical connection portion). This arrangement can not only increase the area through which the electrolyte can pass, facilitating the electrolyte to pass through, but also help relieve thermal stress in the first electrical connection portion, thereby increasing the elasticity of the first electrical connection portion.

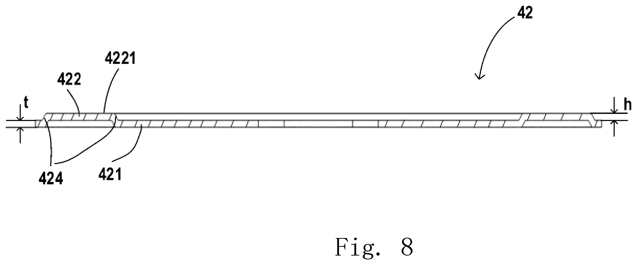

Further preferably, as shown in Fig. 8, the negative current collector plate 42 may further include an annular circumferential edge portion 423 extending outward along a radial direction from the second electrical connection portion 422, and the circumferential edge portion 423 extends in the same plane as the first electrical connection portion 421. When the first electrical connection portion 421 is connected to the negative end portion of the electrode assembly, the circumferential edge portion 423 and the first electrical connection portion 421 abut against the negative end portion of the electrode assembly simultaneously, facilitating the positioning of the first electrical connection portion 421. In addition, since the second electrical connection portion 422 is supported on both sides, the second electrical connection portion 422 can also be prevented from being deformed in the axial direction. When the second electrical connection portion 422 is electrically connected to the closed end portion of the housing of the battery cell 10, the second electrical connection portion 422 abuts against the closed end portion to form a flat contact, and the second electrical connection portion 422 fits more closely to the inner side of the closed end portion 14b of the housing 14, resulting in higher welding reliability. Preferably, the ratio of the area of the second electrical connection portion 422 to the area of the current collector plate 42 is about 0.3 to about 0.6. The welding area of the second electrical connection portion 422 is larger, which effectively improves the welding yield. Moreover, in the process of assembling the battery cell into a battery pack, the welded portion needs to be welded with a conductor, and the larger welding area can ensure the yield of secondary welding.

Preferably, the above first electrical connection portion 421 of the negative current collector plate of the present application can be electrically connected by welding to the negative end portion of the electrode assembly, and the second electrical connection portion 422 can be electrically connected by welding to the closed end portion 14b of the housing. The above welding may be laser welding. The welding path for the above welding may take various forms, such as a continuous welding line (for example, a continuously bent welding line), a discontinuous welding line, or a dotted welding line. In an embodiment, the welding path may be the continuous welding line, which greatly improves the welding contact area, and can greatly improve the rate of charge and discharge of the battery cell.

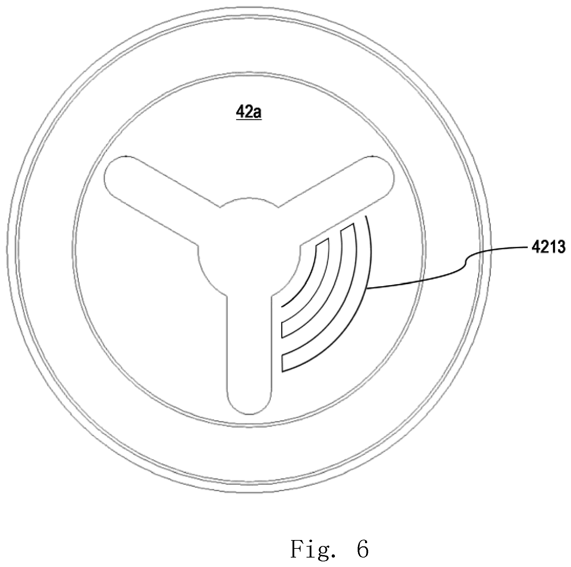

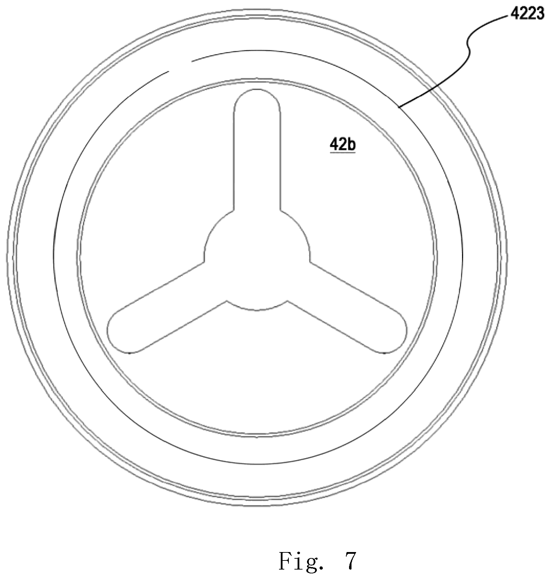

In a preferred embodiment of the present utility model, the welding paths of the first electrical connection portion and the second electrical connection portion are all continuous welding lines, and laser welding is performed along the welding lines. Each sub-portion of the first electrical connection portion 421 can be laser-welded to the negative end portion of the electrode assembly via a first continuous welding line 4213 of the sub-portion that extends from a radially inner side toward a radially outer side in a multiple-bent manner (Fig. 6 exemplarily shows the first welding line 4213 of one of the sub-portions of the first electrical connection portion 421, and it can be understood that the other sub-portions may be welded to the negative end portion via the same or similar welding lines). Such a first welding line extending in a multiple-bent manner can greatly increase the length of the welding line, thereby increasing the electrical contact area between the first electrical connection portion and the negative end portion, and improving the current transfer rate. The second electrical connection portion 422 can be laser-welded to a terminal of the battery cell via a ring-shaped second welding line 4223 extending parallel to the second electrical connection portion (an open ring-shaped welding line shown in Fig. 7).

Further, the ratio of the width of the second electrical connection portion in the radial direction to the width of the first electrical connection portion in the radial direction is about 0.15 to about 0.35. The ratio of the width of the circumferential edge portion in the radial direction to the width of the second electrical connection portion in the radial direction is about 0.1 to about 0.2. Thus, both the first electrical connection portion and the second electrical connection portion have a relatively large region for welding. In particular, the first electrical connection portion accounts for a relatively large proportion of the current collector plate, which facilitates its direct welding to the battery jelly roll.

Preferably, the ratio of the diameter of the central through hole 4212 to the width of the first electrical connection in the radial direction is about 0.1 to about 1.0.

Preferably, the surface of the closed end portion 14b of the housing 14 facing an external space is coated with a coating that covers the welding path of the second electrical connection portion (in this embodiment, the coating covers the above second welding line 4223, and accordingly, the coating is preferably a ring-shaped coating corresponding to the second welding line in terms of position and shape). The coating is used to protect the second welding line 4223 on the side of the closed end portion facing the external space, thereby preventing the second welding line and the surrounding annular region of the housing from rust and corrosion.

During the welding step of the battery manufacturing process, the negative current collector plate is welded to the negative end portion of the electrode assembly (wherein the first side of the negative current collector plate is closely attached to the negative end portion of the electrode assembly, and laser is applied from the second side of the negative current collector plate to form the first continuous welding line described above by laser); thereafter, the electrode assembly is placed into the housing of the battery cell together with the negative current collector plate, and laser is applied from the outer side of the closed end portion of the housing facing the external space to form the second continuous welding line described above by laser.

Since the above welding region between the current collector plate and the negative end portion is located inside the housing, the process of forming the first welding line by laser welding does not damage the housing. Therefore, there is no need to apply an additional protective layer, material or the like to the above first electrical connection region. Forming the second welding line by laser involves directly applying laser at the closed end portion of the housing. Therefore, in a UV spray-coating step, a protective coating needs to be applied to the closed end portion of the housing corresponding to the welding path of the second electrical connection portion, so as to prevent rust, thereby protecting the second welding line and making it less susceptible to failure.

Therefore, the current collector plate according to the present utility model is used so that: it is only necessary to apply, on the surface of the closed end portion 14b of the housing 14 facing the external space, a ring-shaped coating corresponding to the position and shape of the second electrical connection portion, and there is no need to apply the protective coating to other regions of the surface of the closed end portion. This can save material and simplify the processing procedure.

Further preferably, the negative current collector plate 42 uses a conductive material, such as copper, nickel, alloy, etc. In an embodiment, that negative current collector plate 42 include copper material, and a terminal of the second electrical connection portion 422 facing the battery cell and a joining surface 4221 of the second electrical connection portion joined with the terminal are plated with nickel material. That is, the base of the negative current collector plate is made of the copper material, and only the joining surface 4221 that needs to be welded to the housing, is plated with the nickel material. Compared with the case where the material of nickel metal is used throughout, the use of copper material throughout in this embodiment enables the negative current collector plate to have lower internal resistance and better electrical conductivity as a whole, and the copper surface of the first electrical connection portion can be better welded to the flattened portion of the negative end portion which is usually formed by copper material. Moreover, nickel plating at the weld site allows it to be better welded with the housing, avoiding the problem that the pure copper material is typically difficult to weld with other materials.

Preferably, the above current collector plate is an integral member obtained by stamping a metal plate and performing material removal, with a uniform thickness, that is, each portion of the current collector plate has substantially the same thickness. Further preferably, the ratio of the height h of the second electrical connection portion protruding from the extension plane of the first electrical connection portion toward the second side of the current collector plate to the thickness t of the current collector plate is about 1: 15 to about 1: 1.

Preferably, the second electrical connection portion 422 is connected to the first electrical connection portion 421 and/or the circumferential edge portion 423 through an inclined transition portion 424, wherein the transition portion extends obliquely toward the second electrical connection portion 422 on the second side 42b. Such an arrangement enables the transition between the portions of the negative current collector plate to be smoother, making it less susceptible to breakage between the portions when the current collector plate is heated and deformed due to stress. Preferably, an angle formed between the transition portion 424 and a plane where the first electrical connection 421 is located is about 10° to about 90°, better choice; more preferably, the angle formed between the transition portion 424 and the plane where the first electrical connection is located is about 30° to about 60°; further more preferably, the angle formed between the transition portion 424 and the plane where the first electrical connection 421 is located is 30°, or 45°, or 60°.

The present utility model further provides a battery cell 10, including: a housing 14, the housing including a closed end portion 14b and an open end portion 14a opposite the closed end portion; and an electrode assembly 18, wherein the electrode assembly is located within the housing 14 and between the closed end portion 14b and the open end portion 14a, and the electrode assembly 18 includes a negative end portion 18b close to the closed end portion 14b and a positive end portion 18a close to the open end portion 14a; wherein the battery cell further includes the current collector plate discussed above.

It should be noted that the embodiments of the present utility model may be combined and/or modified in various ways, and the results of such combinations and/or modifications should also be regarded as embodiments of the present utility model. The above description of various embodiments of the present utility model is provided to an ordinary person skilled in the art for the purpose of description. The present utility model is not intended to be exclusive or limited to a single disclosed embodiment. An ordinary person skilled in the field of the above teaching will understand various substitutes for and variants of the present utility model. Therefore, although some alternative embodiments have been specifically described, an ordinary person skilled in the art will understand, or develop with relative ease, other embodiments. The present utility model is intended to include all substitutions, modifications and variants of the present utility model described here, as well as other embodiments falling within the spirit and scope of the present utility model described above.

The preferred aspects of the present disclosure may be summarized as follows:
1. A current collector plate (42) for a battery cell (10), characterized in that: the current collector plate comprises:
   a first electrical connection portion (421), wherein the first electrical connection portion is capable of being electrically connected directly to an end portion of an electrode assembly of the battery cell, and wherein the end portion of the electrode assembly of the battery cell is located on a first side (42a) of the current collector plate; and
   a second electrical connection portion (422), wherein the second electrical connection portion (422) is located on a radially outer side of the first electrical connection portion and is substantially parallel to the first electrical connection portion, and the second electrical connection portion is capable of being electrically connected directly to a terminal of the battery cell, and wherein the terminal of the battery cell is located on a second side (42b) of the current collector plate opposite the first side (42a),
   wherein a through slot (4211) is formed in the first electrical connection portion (421), and
   wherein the second electrical connection portion (422) protrudes toward the second side (42b) of the current collector plate relative to the first electrical connection portion (421).
2. The current collector plate (42) according to aspect 1, characterized in that at least two through slots (4211) are formed in the first electrical connection portion (421), with each through slot extending outward along a radial direction from a substantially central position of the current collector plate, wherein the at least two through slots (4211) are configured to be capable of dividing the first electrical connection portion into a plurality of sub-portions.
3. The current collector plate (42) according to aspect 1 or 2, characterized in that the current collector plate is a negative current collector plate,
   wherein the first electrical connection portion (421) is capable of being welded to a negative end portion (18b) of the electrode assembly (18) located on the first side (42a) of the negative current collector plate, so as to electrically connect the current collector plate to the negative end portion, and
   wherein the second electrical connection portion (422) is capable of being welded to a negative terminal of the battery cell located on the second side (42b) of the negative current collector plate, so as to electrically connect the current collector plate to the negative terminal.
4. The current collector plate (42) according to any one of aspects 1 to 3, characterized in that the current collector plate further comprises a central through hole (4212) located on a radially inner side of the first electrical connection portion (421), wherein each of the through slots (4211) extends outward along a radial direction from the central through hole (4212).
5. The current collector plate (42) according to aspect 2, characterized in that the at least two through slots (4211) are configured to distribute evenly along a circumferential direction of the current collector plate, so as to divide the first electrical connection portion evenly into a plurality of sub-portions.
6. The current collector plate (42) according to aspect 4, characterized in that each of the through slots (4211) is of an elongated shape and is configured to extend outward along a radial direction from the central through hole to a position close to a connection region between the first electrical connection portion (421) and the second electrical connection portion (422).
7. The current collector plate (42) according to any one of aspects 1 to 3, characterized in that the current collector plate further comprises:
   an annular circumferential edge portion (423) extending outward along a radial direction from the second electrical connection portion (422), the circumferential edge portion (423) extending in the same plane as the first electrical connection portion (421).
8. The current collector plate (42) according to aspect 5, characterized in that
   each sub-portion of the first electrical connection portion (421) is capable of being welded to an end portion of the electrode assembly via a welding path, the welding path being a continuous bent extension line, a dotted line, or a discontinuous line; and
   the second electrical connection portion (422) is capable of being welded to a terminal of the battery cell via a welding path, the welding path being a continuous extension line, a dotted line, or a discontinuous line.
9. The current collector plate (42) according to any one of aspects 1 to 3, characterized in that the current collector plate is an integral member obtained by stamping a metal plate and performing material removal.
10. The current collector plate (42) according to any one of claims 1 to 3, characterized in that each portion of the current collector plate has a same thickness.
11. The current collector plate (42) according to aspect 11, characterized in that the ratio of the height (h) of the second electrical connection portion (422) protruding from an extension plane of the first electrical connection portion (421) toward the second side of the current collector plate to the thickness (t) of the current collector plate is about 1: 15 to about 1: 1.
12. The current collector plate (42) according to aspect 7, characterized in that
   the ratio of the width of the second electrical connection portion in the radial direction to the width of the first electrical connection portion in the radial direction is about 0.15 to about 0.35; and/or
   the ratio of the width of the circumferential edge portion in the radial direction to the width of the second electrical connection portion in the radial direction is about 0.1 to about 0.2.
13. The current collector plate (42) according to aspect 1 or 2, characterized in that
   the ratio of the diameter of the through slot (4211) to the width of the first electrical connection portion in a radial direction is about 0.1 to about 1.0.
14. The current collector plate (42) according to aspect 4, characterized in that
   the ratio of the diameter of the central through hole (4212) to the width of the first electrical connection in a radial direction is about 0.1 to about 1.0.
15. The current collector plate (42) according to aspect 7, characterized in that
   the second electrical connection portion (422) is connected to the first electrical connection portion (421) and/or the circumferential edge portion (423) through an inclined transition portion (424), wherein the transition portion extends obliquely toward the second electrical connection portion (422) on the second side (42b).
16. The current collector plate (42) according to aspect 15, characterized in that
   an angle formed between the transition portion (424) to a plane where the first electrical connection portion is located is about 10° to about 90°.
17. The current collector plate (42) according to aspect 16, characterized in that
   the angle formed between the transition portion (424) to the plane where the first electrical connection portion is located is about 30° to about 60°.
18. A battery cell (10), comprising:
   a housing (14), the housing including a closed end portion (14b) and an open end portion opposite the closed end portion (14a); and
   an electrode assembly (18), wherein the electrode assembly is located within the housing (14) and between the closed end portion (14b) and the open end portion (14a), and the electrode assembly (18) includes a negative end portion (18b) close to the closed end portion (14b) and a positive end portion (18a) close to the open end portion (14a),
   characterized in that the battery cell further comprises the current collector plate (42) according to any one of claims 1 to 17.
19. The battery cell (10) according to aspect 18, characterized in that
   a negative terminal (34) is integrated in the closed end portion (14b) of the housing (14), or the closed end portion forms the negative terminal (34),
   wherein the current collector plate is a negative current collector plate, and the first electrical connection portion (421) is capable of being welded to the negative end portion (18b) of the electrode assembly located on the first side (42a) of the negative current collector plate, so as to electrically connect the current collector plate to the negative end portion, and
   wherein the second electrical connection portion (422) is capable of being welded to the closed end portion (14b) of the housing located on the second side (42b) of the negative current collector plate, so as to electrically connect the negative current collector plate to the negative terminal (34).
20. The battery cell (10) according to aspect 19, characterized in that
   the second electrical connection portion (422) is capable of being welded to the closed end portion of the housing via a welding path, and
   a surface of the closed end portion (14b) of the housing (14) facing an external space is coated with a coating that covers the welding path.

## Claims

1. A current collector plate (42) for a battery cell (10), **characterized in that**: the current collector plate comprises:
a first electrical connection portion (421), wherein the first electrical connection portion is capable of being electrically connected directly to an end portion of an electrode assembly of the battery cell, and wherein the end portion of the electrode assembly of the battery cell is located on a first side (42a) of the current collector plate; and
a second electrical connection portion (422), wherein the second electrical connection portion (422) is located on a radially outer side of the first electrical connection portion and is substantially parallel to the first electrical connection portion, and the second electrical connection portion is capable of being electrically connected directly to a terminal of the battery cell, and wherein the terminal of the battery cell is located on a second side (42b) of the current collector plate opposite the first side (42a),
wherein a through slot (4211) is formed in the first electrical connection portion (421), and
wherein the second electrical connection portion (422) protrudes toward the second side (42b) of the current collector plate relative to the first electrical connection portion (421).

2. The current collector plate (42) according to claim 1, **characterized in that** at least two through slots (4211) are formed in the first electrical connection portion (421), with each through slot extending outward along a radial direction from a substantially central position of the current collector plate, wherein the at least two through slots (4211) are configured to be capable of dividing the first electrical connection portion into a plurality of sub-portions.

3. The current collector plate (42) according to claim 1 or 2, **characterized in that** the current collector plate is a negative current collector plate,
wherein the first electrical connection portion (421) is capable of being welded to a negative end portion (18b) of the electrode assembly (18) located on the first side (42a) of the negative current collector plate, so as to electrically connect the current collector plate to the negative end portion, and
wherein the second electrical connection portion (422) is capable of being welded to a negative terminal of the battery cell located on the second side (42b) of the negative current collector plate, so as to electrically connect the current collector plate to the negative terminal.

4. The current collector plate (42) according to any one of claims 1 to 3, **characterized in that** the current collector plate further comprises a central through hole (4212) located on a radially inner side of the first electrical connection portion (421), wherein each of the through slots (4211) extends outward along a radial direction from the central through hole (4212);
preferably, the ratio of the diameter of the central through hole (4212) to the width of the first electrical connection portion in a radial direction is about 0.1 to about 1.0.

5. The current collector plate (42) according to any one of claims 2 to 4, **characterized in that** the at least two through slots (4211) are configured to distribute evenly along a circumferential direction of the current collector plate, so as to divide the first electrical connection portion evenly into a plurality of sub-portions.

6. The current collector plate (42) according to any one of claims 2 to 5, **characterized in that** each of the through slots (4211) is of an elongated shape and is configured to extend outward along a radial direction from the central through hole to a position close to a connection region between the first electrical connection portion (421) and the second electrical connection portion (422).

7. The current collector plate (42) according to any one of claims 1 to 6, **characterized in that** the current collector plate further comprises:
an annular circumferential edge portion (423) extending outward along a radial direction from the second electrical connection portion (422), the circumferential edge portion (423) extending in the same plane as the first electrical connection portion (421);
preferably, the ratio of the width of the second electrical connection portion in the radial direction to the width of the first electrical connection portion in the radial direction is about 0.15 to about 0.35; and/or the ratio of the width of the circumferential edge portion in the radial direction to the width of the second electrical connection portion in the radial direction is about 0.1 to about 0.2.

8. The current collector plate (42) according to any one of claims 5 to 7, **characterized in that**
each sub-portion of the first electrical connection portion (421) is capable of being welded to an end portion of the electrode assembly via a welding path, the welding path being a continuous bent extension line, a dotted line, or a discontinuous line; and
the second electrical connection portion (422) is capable of being welded to a terminal of the battery cell via a welding path, the welding path being a continuous extension line, a dotted line, or a discontinuous line.

9. The current collector plate (42) according to any one of claims 1 to 8, **characterized in that** the current collector plate is an integral member obtained by stamping a metal plate and performing material removal.

10. The current collector plate (42) according to any one of claims 1 to 8, **characterized in that** each portion of the current collector plate has the same thickness.

11. The current collector plate (42) according to any one of claims 1 to 10, **characterized in that** the ratio of the height (h) of the second electrical connection portion (422) protruding from an extension plane of the first electrical connection portion (421) toward the second side of the current collector plate to the thickness (t) of the current collector plate is about 1: 15 to about 1: 1.

12. The current collector plate (42) according to any one of claims 1 to 11, **characterized in that**
the ratio of the diameter of the through slot (4211) to the width of the first electrical connection portion in a radial direction is about 0.1 to about 1.0.

13. The current collector plate (42) according to any one of claims 1 to 12, in particular to claims 7 to 12, **characterized in that**
the second electrical connection portion (422) is connected to the first electrical connection portion (421) and/or the circumferential edge portion (423) through an inclined transition portion (424), wherein the transition portion extends obliquely toward the second electrical connection portion (422) on the second side (42b);
preferably, an angle formed between the transition portion (424) to a plane where the first electrical connection portion is located is about 10° to about 90°;
more preferably, the angle formed between the transition portion (424) to the plane where the first electrical connection portion is located is about 30° to about 60°.

14. A battery cell (10), comprising:
a housing (14), the housing including a closed end portion (14b) and an open end portion opposite the closed end portion (14a); and
an electrode assembly (18), wherein the electrode assembly is located within the housing (14) and between the closed end portion (14b) and the open end portion (14a), and the electrode assembly (18) includes a negative end portion (18b) close to the closed end portion (14b) and a positive end portion (18a) close to the open end portion (14a),
**characterized in that** the battery cell further comprises the current collector plate (42) according to any one of claims 1 to 13.

15. The battery cell (10) according to claim 14, **characterized in that**
a negative terminal (34) is integrated in the closed end portion (14b) of the housing (14), or the closed end portion forms the negative terminal (34),
wherein the current collector plate is a negative current collector plate, and the first electrical connection portion (421) is capable of being welded to the negative end portion (18b) of the electrode assembly located on the first side (42a) of the negative current collector plate, so as to electrically connect the current collector plate to the negative end portion, and
wherein the second electrical connection portion (422) is capable of being welded to the closed end portion (14b) of the housing located on the second side (42b) of the negative current collector plate, so as to electrically connect the negative current collector plate to the negative terminal (34);
preferably, the second electrical connection portion (422) is capable of being welded to the closed end portion of the housing via a welding path, and
a surface of the closed end portion (14b) of the housing (14) facing an external space is coated with a coating that covers the welding path.
